# EUROPEAN PATENT SPECIFICATION

(11) **EP 0 780 255 B1**
(45) Date of publication and mention of the grant of the patent: **22.03.2000**
(21) Application number: 96118032.0
(22) Date of filing: 11.11.1996
(51) Int. Cl.: B60J 5/04

(54) **A motor vehicle door structure**
Struktur für eine Motorfahrzeug-Tür
Structure de portière de véhicule automobile

(30) Priority: 21.12.1995 IT TO951032
(43) Date of publication of application: 25.06.1997
(73) Proprietor: FIAT AUTO S.p.A., 10135 Torino (IT)
(72) Inventor: Barbiero, Roberto, 10028 Trofarello (IT)
(74) Representative: Di Francesco, Gianni

(56) References cited:
- EP-A- 0 096 188
- EP-A- 0 483 895
- EP-A- 0 579 006
- EP-A- 0 613 797
- FR-A- 2 698 047
- GB-A- 2 191 156

## Description

The present invention refers to a motor vehicle door structure, particularly for a motorcar side door with a window.

Security systems which have been recently installed on motorcars have increased their weight, also increasing fuel consumption.

In particular, side-collision protection bars are mounted at mid-height on the side doors of the most recent cars. Such bars, besides contributing to reinforce the car overall, limit inward deformation of the side door in case of crashes which could injure the passengers. A door structure with such burs is disclosed in the patent application GB-A- 2 191 156. However, this structure has a very large window frame thereby increasing its total weight.

Obviously, the above bars increase the overall vehicle weight considerably and constitute an obstacle in mounting rationally apparatuses within the door, such as window regulator electric devices, locks, etc.

The object of the present invention is to provide a door structure which besides being very safe and rigid both vertically and horizontally, is of reduced weight and easy to assemble.

The above object is attained according to the present invention by the provision of a carrying structure for the side door of a motorcar as claimed in claim 1.

Further characteristics and advantages of the present invention will be apparent from the following detailed description of a not-limiting embodiment considered in combination with the accompanying drawings in which:
FIG. 1 is an exploded view of a door structure in accordance with the present invention; and
FIG. 2 is a partial section view of the door of FIG. 1.

With reference initially to the drawings, numeral 10 designates a side door of a vehicle, particularly a car. Door 10 has an upper frame 12 defining the window and acting as a guide means for the movable glass 13 which closes the window. Further, door 10 has an outer covering 14 and an inner contoured frame 18 providing an aperture 20 for access to the internal devices of the door. A panel 22 seals aperture 20.

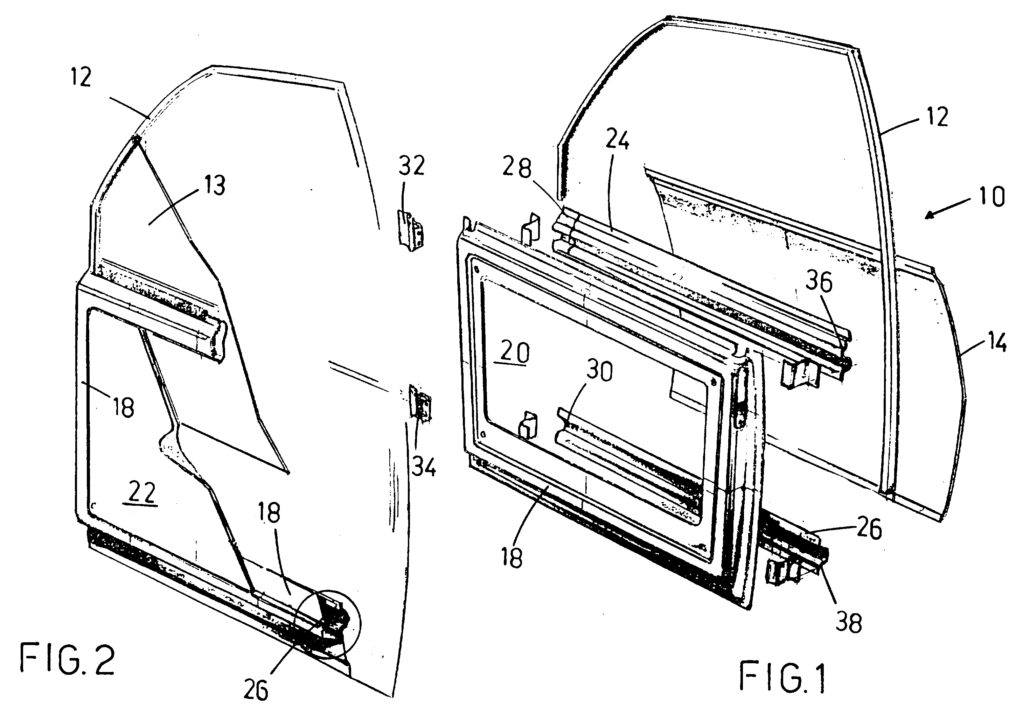

In accordance with the present invention, the carrying structure of door 10 is constituted by upper and lower shaped cross members 24, 26, respectively, obtained through shaping or moulding processes. Cross members 24, 26 are then coupled by welding or gluing to contoured frame 18 as shown in the circle of FIG. 2.

The front ends 28, 30 of cross members 24, 26 provide attachment to door hinges 32, 34, respectively.

Of the rear ends 36, 38 of said cross members, only that of upper cross member 24 provides an attachment for the lock (not shown) or a lock engaging member mounted to the body centre pillar (not shown). This recent constructional technique provides for weight reduction of the door.

Also the other ends 36, 38 are connected to the window frame 12 which, unlike the front part that ends at the level of the upper cross member 24, extends to the lower cross member 26, thereby contributing to reinforce the structure as a whole.

According to the invention, this construction provides for a less heavy door whilst maintaining adequate safety characteristics that allow the side-collision protection bars to be dispensed with.

In fact the lower cross member 26 itself acts as such a bar. In addition, this construction allows to make generally thinner doors while improving accessibility to the space within the door, owing to the fact that aperture 20 is not hindered by a side-collision protection bar.

Finally, the whole front part of frame 12 conventionally used for fixing the hinges is now eliminated, with the result of rendering the door construction lighter and simpler overall.

## Claims

1. A carrying structure for the side door (10) of a motorcar, in particular a door having a window, comprising a window frame (12) and an outer covering (14), and an upper (24) and a lower (26) cross member characterised in that the cross members are rigidly fixed to an inner closed frame (18).

2. A structure as claimed in claim 1, characterized in that one end (36) of the upper cross member (24) carries the mechanism of a lock.

3. A structure as claimed in claim 1, characterized in that the closed frame (18) has a central aperture (20) providing for access to the inside of the door.

4. A structure as claimed in claim 3, characterized in that said central aperture (20) of the closed frame (18) is sealed by a panel (22).

5. A structure as claimed in claim 1, characterized in that at the front part of the door (10) the window frame (12) ends at and is connected to the upper cross member (24).

6. A structure as claimed in claim 1, characterized in that the window frame (12) at the rear part of the door (10) is connected to the upper cross member (24) and ends at and is connected to the lower cross member (26).

## Patentansprüche

1. Tragende Struktur für die Seitentür (10) eines Autos, insbesondere für eine Tür mit Fenster umfassend einen Fensterrahmen (12) und eine äußere Abdeckung (14) und einen oberen (24) und einen unteren (26) Querträger,
dadurch gekennzeichnet,
daß die Querträger starr an einem inneren geschlossenen Rahmen (18) befestigt sind.

2. Struktur nach Anspruch 1,
dadurch gekennzeichnet,
daß ein Ende (36) des oberen Querträgers (24) einen Verschlußmechanismus trägt.

3. Struktur nach Anspruch 1,
dadurch gekennzeichnet,
daß der geschlossene Rahmen (18) eine zentrale Öffnung (20) aufweist, die Zugang zum Inneren der Tür bietet.

4. Struktur nach Anspruch 3,
dadurch gekennzeichnet,
daß die zentrale Öffnung (20) des geschlossenen Rahmens (18) durch eine Platte (22) versiegelt ist.

5. Struktur nach Anspruch 1,
dadurch gekennzeichnet,
daß der Fensterrahmen (12) am vorderen Teil der Tür (10) an dem oberen Querträger (24) endet und mit diesem verbunden ist.

6. Struktur nach Anspruch 1,
dadurch gekennzeichnet,
daß der Fensterrahmen (12) am hinteren Teil der Tür (10) mit dem oberen Querträger (24) verbunden ist und an dem unteren Querträger (26) endet und mit diesem verbunden ist.

## Revendications

1. Structure portante pour la porte latérale (10) d'une automobile, en particulier une porte ayant une fenêtre, comprenant un châssis de fenêtre (12) et un habillage extérieur (14), ainsi qu'un élément transversal supérieur (24) et un élément transversal inférieur (26), caractérisée en ce que les éléments transversaux sont fixés de manière rigide à un châssis interne fermé (18).

2. Structure selon la revendication 1, caractérisée en ce qu'une extrémité (36) de l'élément transversal supérieur (24) supporte le mécanisme d'une serrure.

3. Structure selon la revendication 1, caractérisée en ce que le châssis fermé (18) possède une ouverture centrale (20) permettant un accès à l'intérieur de la porte.

4. Structure selon la revendication 3, caractérisée en ce que ladite ouverture centrale (20) du châssis fermé (18) est obturée hermétiquement par un panneau (22).

5. Structure selon la revendication 1, caractérisée en ce qu'à la partie avant de la porte (10), le châssis de fenêtre (12) se termine au niveau de l'élément transversal supérieur (24) et est connecté audit élément.

6. Structure selon la revendication 1, caractérisée en ce que le châssis de fenêtre (12), à la partie arrière de la porte (10), est connecté à l'élément transversal supérieur (24), et il se termine au niveau de l'élément transversal inférieur (26) et est connecté audit élément.
